# EUROPÄISCHE PATENTSCHRIFT

(11) **EP 3 488 347 B1**
(45) Veröffentlichungstag und Bekanntmachung des Hinweises auf die Patenterteilung: **01.12.2021**
(21) Anmeldenummer: 17751281.1
(22) Anmeldetag: 24.07.2017
(51) Int. Cl.: G06F 11/07, G09G 3/00, G06F 3/14

(54) **ÜBERWACHEN EINER ANZEIGE EINES FÜHRERSTANDS EINES VERKEHRSMITTELS**
MONITORING A DISPLAY OF A DRIVER'S CAB OF A MEANS OF TRANSPORTATION
CONTRÔLE D'UN AFFICHAGE D'UNE CABINE DE CONDUITE D'UN MOYEN DE TRANSPORT

(30) Priorität: 23.08.2016 DE 102016215809
(43) Veröffentlichungstag der Anmeldung: 29.05.2019
(73) Patentinhaber: Siemens Mobility GmbH, 81739 München (DE)
(72) Erfinder: ACKERMANN, Andreas, 90765 Fürth (DE); HORN, Andreas, 91052 Erlangen (DE); RASTOFER, Uwe, 91052 Erlangen (DE)
(86) Internationale Anmeldenummer: PCT/EP2017/068573
(87) Internationale Veröffentlichungsnummer: WO 2018/036728

(56) Entgegenhaltungen:
- EP-A1- 2 254 039
- EP-A1- 2 735 962
- WO-A1-2006/058476
- US-A1- 2016 138 968

## Beschreibung

Die Erfindung betrifft ein Verfahren zum Überwachen einer Anzeige eines Führerstands eines Verkehrsmittels. Überdies betrifft die Erfindung eine Anzeigeeinrichtung. Zudem betrifft die Erfindung einen Führerstand für ein Verkehrsmittel.

Bei der Anzeige von Informationen zum aktuellen Fahrzustand eines Zugs sind im Führerstand Anzeigen installiert. Die angezeigten Informationen müssen dahingehend zuverlässig sein, dass dem Triebwagenführer keine falschen Daten angezeigt werden. Beispielsweise darf dem Triebwagenführer während der Fahrt keine zu niedrige Geschwindigkeit angezeigt werden. Zur Überwachung der Zuverlässigkeit der angezeigten Informationen wird ein Vergleich einer Soll-Anzeige mit einer Ist-Anzeige durchgeführt. Bei dieser Art von Prüfverfahren wird für jeden Sollwert eine Soll-Anzeige ermittelt und darüber ein Prüfcode gebildet. Bei dem Anzeigegerät wird die digitale Schnittstelle zwischen Grafikkarte und Bildschirm mitgelesen und ebenfalls für die Ist-Anzeige ein Ist-Prüfcode gebildet. Eine sichere Vergleichseinheit prüft während der Fahrt die Ist-Prüfcodes durch Vergleich mit den Soll-Prüfcodes und stellt so fest, ob die Anzeige korrekt ist.

Bei herkömmlichen Prüfverfahren werden Prüfcodes bzw. Prüfsummen, auch Ist-Prüfcode genannt, die nahe an der Anzeige gewonnen wurden, mit dem aktuellen Wert der Prozessgröße, auch Soll-Prozessgröße genannt, verglichen. Für den Vergleich kann entweder der Ist-Prüfcode über eine Tabelle in eine Ist-Prozessgröße übersetzt werden und diese dann mit der Soll-Prozessgröße verglichen werden oder alternativ die Soll-Prozessgröße über eine Tabelle in einen Soll-Prüfcode übersetzt werden und dieser dann mit dem Ist-Prüfcode verglichen werden. Bei der Erzeugung des Soll-Prüfcodes wird dieser als Referenz-Prüfcode mit Hilfe einer sogenannten Prüfsummen-Vorhersageeinheit berechnet bzw. aus einer Tabelle ermittelt, während der Ist-Prüfcode mit Hilfe eines Prüfsummen-Extraktors aus dem Istwert der Ist-Prozessgröße sowie Bildinformationen, wie zum Beispiel Pixeldaten, der Bilddarstellung des Wertes der Ist-Prozessgröße gewonnen wird.

In EP 2 273 369 B1 wird ein Prüfverfahren beschrieben, bei dem über eine "Lookup-Tabelle" ein Vergleich zwischen Prüfcodes erfolgt. Wird dabei ein entsprechender Vergleichscode identifiziert, so wird ein diesem Vergleichscode zugeordneter Wert mit dem Wert der tatsächlichen Eingangsgröße verglichen.

In DE 10 2014 214 667 A1 wird ein Prüfverfahren für eine Darstellung einer dreidimensionalen graphischen Information beschrieben.

In US 2015/ 0 242 660 A1 erfolgt eine Identifizierung unterschiedlicher Artikel über einen auf einem Primzahlenprodukt basierenden Identifizierungscode.

In EP 2 735 962 A1 werden Prüfsummen auf Basis von Anzeigebildern berechnet, wobei eine Filterung vorgenommen wird, um nur sicherheitsrelevante Bildanteile bei der Berechnung der Prüfsummen zu berücksichtigen.

In EP 2 254 039 A1 werden angezeigte Informationen durch einen Vergleich von Prüfsummen auf Basis einer Anzeige mit Referenzprüfsummen, welche auf Basis eines Eingangssignals erzeugt werden, verifiziert.

Es ist eine Aufgabe der vorliegenden Erfindung, ein alternatives Verfahren und eine entsprechende Anordnung zum Überwachen einer Anzeige in einem Führerstand eines Verkehrsmittels anzugeben.

Diese Aufgabe wird durch ein Verfahren zum Überwachen einer Anzeige eines Führerstands eines Verkehrsmittels gemäß Patentanspruch 1, eine Anzeigeeinrichtung gemäß Patentanspruch 4 und einen Führerstand gemäß Patentanspruch 5 gelöst.

Bei dem erfindungsgemäßen Verfahren zum Überwachen einer Anzeige eines Führerstands eines Verkehrsmittels wird eine Bildinformation von einer Anzeigeeinrichtung erfasst. Die Bildinformation der Anzeigeeinrichtung wurde von der Anzeigeeinrichtung auf Basis eines Werts einer von einer Fahrzeugsteuerungseinrichtung empfangenen Soll-Prozessgröße erzeugt. Auf Basis der erfassten Bildinformation wird ein Ist-Prüfcode ermittelt. Der Prüfcode ergibt sich aus der Bildinformation, beispielsweise umfassend Pixeldaten, einer bildlichen Darstellung des Werts der Prozessgröße auf der Anzeige des Führerstands.

Weiterhin wird eine dem ermittelten Ist-Prüfcode anhand einer ersten Tabelle eindeutig zugeordnete Primzahl ermittelt. Zusätzlich wird ein von der Fahrzeugsteuerungseinrichtung erzeugter Wert der Soll-Prozessgröße möglicherweise abweichender, korrekter Wert der Soll-Prozessgröße erfasst. Als Soll-Prozessgröße bzw. als Wert der Soll-Prozessgröße soll in diesem Zusammenhang ein auf der Anzeige des Führerstands anzuzeigender Messwert verstanden werden. Vorzugsweise soll dieser Messwert einem Fahrzustand des Verkehrsmittels, noch bevorzugter die Kinematik des Verkehrsmittels, beschreiben.

Zu der Soll-Prozessgröße wird ein dem korrekten Wert der Soll-Prozessgröße anhand einer zweiten Tabelle eindeutig zugeordnetes Primzahlprodukt erfasst, wobei das Primzahlprodukt die Primzahlen aller dem korrekten Wert zugeordneten zulässigen Ist-Prüfcodes umfasst. Das Primzahlprodukt kann als eine Art Erwartungswert aufgefasst werden. Als Erwartungswert soll in diesem Zusammenhang ein Wert verstanden werden, der die einem Wert einer Prozessgröße zugeordneten "erlaubten" bzw. "korrekten" bildlichen Darstellungen repräsentiert. Im Grenzfall repräsentiert dieser Erwartungswert nur eine einzige bildliche Darstellung, deren Darstellung dem exakten Wert der zugeordneten Prozessgröße entspricht. Alternativ kann der Erwartungswert jedoch auch eine Mehrzahl von bildlichen Darstellungen repräsentieren. Mehrere "erlaubte" bzw. "korrekte" bildliche Darstellungen sind möglich, wenn es ein Toleranzintervall um den exakten Wert einer Prozessgröße gibt oder wenn sich lediglich die Farbinformationen unterscheiden oder beides zusammen.

Schließlich wird geprüft, ob die bildliche Darstellung zum Wert der Soll-Prozessgröße "erlaubt" bzw. "korrekt" ist, indem ermittelt wird, ob das der Soll-Prozessgröße zugeordnete Primzahlprodukt durch die über den Ist-Prüfcode der bildlichen Darstellung zugeordnete Primzahl teilbar ist. Ist die Division von Primzahlprodukt und Primzahl ohne Rest möglich, kann die bildliche Darstellung der erfassten Soll-Prozessgröße als korrekt eingestuft werden. Ist die Division von Primzahlprodukt und Primzahl nicht ohne Rest möglich, muss davon ausgegangen werden, dass die bildliche Darstellung der Soll-Prozessgröße als fehlerhaft einzustufen ist.

Eine Wahl eines Erwartungswerts als Referenzgröße ermöglicht die Zuordnung einer Vielzahl von bildlichen Darstellungen zu einer einzigen Referenzgröße. Denn der Erwartungswert kann so gebildet werden, dass er eine Mehrzahl von Primzahlen repräsentiert, die jeweils unterschiedlichen bildlichen Darstellungen zugeordnet sein können. Auf diese Weise ist es möglich, eine ganze Menge von bildlichen Darstellungen als Referenzgröße zu nutzen. Beispielsweise kann hiermit eine leichte Abweichung eines Istwerts einer Prozessgröße von einem Sollwert einer Prozessgröße noch als korrekt getestet werden, wenn deren zugeordnete Primzahl Teiler des Erwartungswertes ist.

Die erfindungsgemäße Anzeigeeinrichtung weist eine Bilderzeugungseinheit auf, welche dazu eingerichtet ist, auf Basis einer von einer Fahrzeugsteuerungseinrichtung erzeugten Soll-Prozessgröße bildliche Darstellungen eines Wertes der Soll-Prozessgröße zu erzeugen. Teil der erfindungsgemäßen Anzeigeeinrichtung sind außerdem eine Bilddarstellungseinheit zum Darstellen der bildlichen Darstellungen auf einer Bildanzeige und eine Prüfcode-Ermittlungseinheit zum Ermitteln eines Ist-Prüfcodes auf Basis der auf der Bildanzeige dargestellten Bildinformation. Überdies umfasst die erfindungsgemäße Anzeigeeinrichtung auch eine Bildprüfungseinheit. Die Bildprüfungseinheit ist dazu eingerichtet, einen von der Fahrzeugsteuerung erzeugten von dem angezeigten Wert der Soll-Prozessgröße möglicherweise abweichenden, korrekten Wert der Soll-Prozessgröße zu erfassen und ein dem korrekten Wert der Soll-Prozessgröße anhand einer zweiten Tabelle eindeutig zugeordnetes Primzahlprodukt zu ermitteln, wobei das Primzahlprodukt die Primzahlen aller dem korrekten Wert zugeordneten zulässigen Werte des Ist-Püfcodes umfasst. Weiterhin ist die Bildprüfungseinheit dazu eingerichtet, einen von der Prüfcode-Ermittlungseinheit ermittelten Ist-Prüfcode zu erfassen und eine dem eingelesenen Ist-Prüfcode anhand der ersten Tabelle eindeutig zugeordnete Primzahl zu ermitteln. Zudem weist die Bildprüfungseinheit eine Prüffunktion auf zum Prüfen, ob die bildliche Darstellung korrekt ist, wobei getestet wird, ob das Primzahlprodukt durch die dem Ist-Prüfcode zugeordnete Primzahl teilbar ist.

Eine solche Anzeigeeinrichtung kann als Anzeigeeinheit ausgebildet sein, welche die Bilderzeugungseinheit, die Bilddarstellungseinheit, die Prüfcode-Ermittlungseinheit und die Bildprüfungseinheit umfasst. Die Anzeigeeinrichtung kann aber auch eine separate Bildinformationserzeugungseinheit, welche die Bilderzeugungseinheit und die Bildprüfungseinheit umfasst, und eine räumlich getrennte Anzeigeeinheit aufweisen, welche die Bilddatendarstellungseinheit und die Prüfcode-Ermittlungseinheit umfasst.

Der erfindungsgemäße Führerstand für ein Verkehrsmittel weist eine Fahrzeugsteuerungseinrichtung zum Empfangen von Sensordaten betreffend eine Soll-Prozessgröße und zum Erzeugen einer Soll-Prozessgröße auf. Der erfindungsgemäße Führerstand umfasst außerdem eine erfindungsgemäße Anzeigeeinrichtung.

Die wesentlichen Komponenten der erfindungsgemäßen Anzeigeeinrichtung können zum überwiegenden Teil in Form von Softwarekomponenten ausgebildet sein. Dies betrifft insbesondere die Bilderzeugungseinheit, die Prüfcode-Ermittlungseinheit und die Bildprüfungseinheit. Grundsätzlich können diese Komponenten aber auch zum Teil, insbesondere wenn es um besonders schnelle Berechnungen geht, in Form von softwareunterstützter Hardware, beispielsweise FPGAs oder dergleichen, realisiert sein. Ebenso können die benötigten Schnittstellen zwischen einzelnen Einheiten, beispielsweise wenn es nur um eine Übernahme von Daten aus anderen Softwarekomponenten geht, als Softwareschnittstellen ausgebildet sein. Sie können aber auch als hardwaremäßig aufgebaute Schnittstellen ausgebildet sein, die durch geeignete Software angesteuert werden.

Eine weitgehend softwaremäßige Realisierung hat den Vorteil, dass auch schon bisher verwendete Anzeigeeinrichtungen auf einfache Weise durch ein Software-Update nachgerüstet werden können, um auf die erfindungsgemäße Weise zu arbeiten. Insofern wird die Aufgabe auch durch ein Computerprogrammprodukt mit einem Computerprogramm gelöst, welches direkt in einen Speicher einer Anzeigeeinrichtung ladbar ist, mit Programmcodeabschnitten, um alle Schritte des erfindungsgemäßen Verfahrens auszuführen, wenn das Programm in der Anzeigeeinrichtung ausgeführt wird.

Ein solches Computerprogrammprodukt kann neben dem Computerprogramm gegebenenfalls zusätzliche Bestandteile wie z. B. eine Dokumentation und/oder zusätzliche Komponenten auch Hardware-Komponenten, wie z.B. Hardware-Schlüssel (Dongles etc.) zur Nutzung der Software, umfassen

Zum Transport zur Anzeigeeinrichtung und/oder zur Speicherung an oder in der Anzeigeeinrichtung kann ein computerlesbares Medium, beispielsweise ein Memorystick, eine Festplatte oder ein sonstiger transportabler oder fest eingebauter Datenträger dienen, auf welchem die von einer Rechnereinheit der Anzeigeeinrichtung einlesbaren und ausführbaren Programmabschnitte des Computerprogramms gespeichert sind. Die Rechnereinheit kann z.B. hierzu einen oder mehrere zusammenarbeitende Mikroprozessoren oder dergleichen aufweisen.

Erfindungsgemäß wird die erste Tabelle, also die Tabelle, welche einzelnen Prüfcodes Primzahlen eindeutig zuweist, mit Hilfe der folgenden Schritte erzeugt: Es wird eine bildliche Darstellung für einen ersten Wert einer Prozessgröße erzeugt. Über die bildliche Darstellung wird ein Prüfcode berechnet. Weiterhin wird eine Primzahl dem Prüfcode eindeutig zugeordnet und der Prüfcode und die zugeordnete Primzahl werden in der ersten Tabelle abgespeichert. Die genannten Schritte werden für jeden möglichen Prozesswert wiederholt, so dass eine vollständige Tabelle mit Prüfcodes und diesen eindeutig zugeordneten Primzahlen entsteht. Im Gegensatz zur herkömmlichen Vorgehensweise werden also nicht einfach Tabellen erstellt, die nur bildliche Darstellungen von Werten von Prozessgrößen mit Prüfcodes in Beziehung setzen, sondern es werden den Prüfcodes zusätzlich Primzahlen zugeordnet deren spezielle Eigenschaft der Teilerfremdheit genutzt werden kann, um sie auch zusammengefasst eindeutig zu identifizieren.

Erfindungsgemäß wird die zweite Tabelle mit Hilfe der folgenden Schritte erzeugt: Es wird eine Mehrzahl von gültigen bildlichen Darstellungen zu einem ersten Prozesswert einer Prozessgröße ausgewählt. D.h., es werden die bildlichen Darstellungen in einem vorbestimmten Toleranzintervall zu um einen Wert einer Prozessgröße liegenden Werten oder andersfarbliche Darstellungen der Prozessgröße ermittelt. Nachfolgend werden auf Basis der ausgewählten bildlichen Darstellungen oder andersfarbigen Darstellung die zugeordneten Prüfcodes berechnet. Anschließend wird eine dem jeweiligen Prüfcode zugeordnete Primzahl aus der ersten Tabelle entnommen und ein Primzahlprodukt durch Multiplizieren aller dem ersten Prozesswert zugeordneten aufgefundenen Primzahlen ermittelt. Nun wird der erste Wert der Prozessgröße mit dem zugeordneten Primzahlenprodukt zusammen in der zweiten Tabelle gespeichert. Die genannten Schritte werden mit jedem möglichen Prozesswert wiederholt, um eine vollständige Tabelle mit Prozesswerten und diesen zugeordneten Primzahlenprodukten zu erzeugen.

D.h., es werden zu jedem weiteren Wert einer Prozessgröße zum Beispiel Werte ermittelt, die in einem Toleranzintervall liegen, und zu diesen Werten werden die entsprechenden Prüfcodes ermittelt. Anschließend werden Primzahlen zu den in dem Toleranzintervall ermittelten Prüfcodes anhand der ersten Tabelle ermittelt. Schließlich wird ein Erwartungswert als Produkt der zugeordneten Primzahlen ermittelt. Auf diese Weise lässt sich vorteilhaft ein Toleranzintervall um einen Prozesswert herum definieren. Das Toleranzintervall kann zum Beispiel Werte von Prozessgrößen umfassen, welche etwas kleiner oder größer als der ermittelte Sollwert der Prozessgröße sind. Es kann aber auch unterschiedliche Farbgebungen der bildlichen Darstellung der Prozessgrößen umfassen. Diesen Werten und abweichenden Darstellungen innerhalb des Toleranzintervalls werden nun ebenfalls Prüfcodes zugewiesen und den jeweiligen Prüfcodes werden wiederum unterschiedliche Primzahlen zugeordnet. Aus den einzelnen Primzahlen lässt sich dann ein Erwartungswert berechnen, der sämtliche Primzahlen und damit auch bildliche Darstellungen repräsentiert, die den Werten bzw. Farbgebungen des Toleranzintervalls zugeordnet sind. Mithin muss bei einer Prüfung, ob ein Istwert der Prozessgröße korrekt ist, nur geprüft werden, ob eine entsprechende Primzahl, die einem Ist-Prüfcode zugeordnet ist, der auf Basis der aktuellen bildlichen Darstellung berechnet wurde, in dem ermittelten Erwartungswert als Teiler enthalten ist.

Besonders bevorzugt umfasst das Verkehrsmittel eine der folgenden Verkehrsmittelarten:
- einen Zug,
- ein Flugzeug,
- einen Autobus,
- einen Lastwagen,
- einen Pkw.

Insbesondere im kommerziellen Personentransport sind Maßnahmen zur Gewährleistung der Sicherheit der Passagiere besonders wichtig. Hierzu gehört auch die Absicherung von korrekten Informationen hinsichtlich des Fahrzustands des Transportmittels.

In einer besonders effektiven Variante des erfindungsgemäßen Verfahrens zum Überwachen einer Anzeige eines Führerstands eines Verkehrsmittels umfasst die Soll-Prozessgröße eine Geschwindigkeit eines Verkehrsmittels. Eine in bestimmten Grenzen korrekte Anzeige der Geschwindigkeit eines Verkehrsmittels ist besonders sicherheitsrelevant, da insbesondere aufgrund einer überhöhten Geschwindigkeit schwere Unfälle passieren können. Alternativ oder zusätzlich kann die Soll-Prozessgröße auch eine Beschleunigung oder Verzögerung einer Bewegung des Verkehrsmittels umfassen.

Die Erfindung wird im Folgenden unter Hinweis auf die beigefügten Figuren anhand von Ausführungsbeispielen noch einmal näher erläutert. Es zeigen:
- FIG 1: ein Flussdiagramm, welches ein Verfahren zum Überwachen einer Anzeige eines Führerstands eines Zugs gemäß einem Ausführungsbeispiel der Erfindung veranschaulicht,
- FIG 2: ein Flussdiagramm, welches Schritte zum Erstellen einer ersten Tabelle im Detail veranschaulicht,
- FIG 3: ein Flussdiagramm, welches Schritte zum Erstellen einer zweiten Tabelle im Detail veranschaulicht,
- FIG 4: eine schematische Darstellung eines Führerstands eines Zugs gemäß einem ersten Ausführungsbeispiel der Erfindung,
- FIG 5: eine schematische Darstellung eines Führerstands eines Zugs gemäß einem zweiten Ausführungsbeispiel der Erfindung.

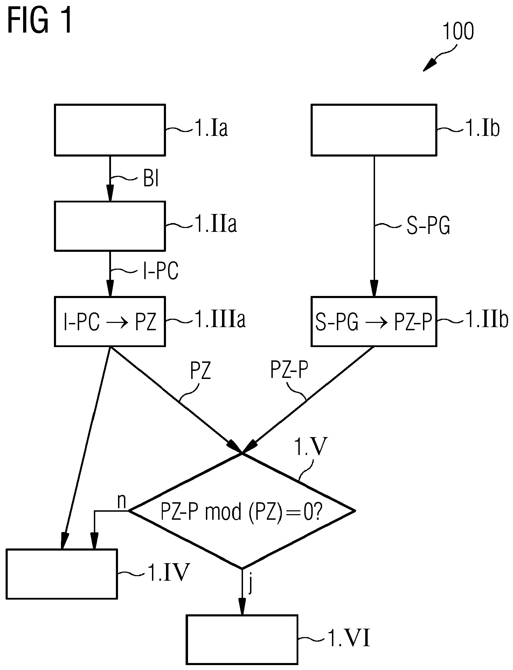

In FIG 1 ist ein Flussdiagramm 100 gezeigt, welches ein Verfahren zum Überwachen einer Anzeige eines Führerstands eines Zugs gemäß einem Ausführungsbeispiel der Erfindung verdeutlicht.

Bei dem Schritt 1.Ia wird zunächst eine bildliche Darstellung BI von einer Bilddarstellungseinheit einer Anzeigeeinrichtung empfangen.

Bei dem Schritt 1.IIa wird dann über die bildliche Darstellung BI ein Ist-Prüfcode I-PC berechnet. Auf Basis einer ersten Tabelle TAB1 wird nachfolgend bei einem Schritt 1.IIIa eine dem ermittelten Ist-Prüfcode I-PC zugeordnete Primzahl PZ ermittelt. Falls keine Primzahl für den Ist-Prüfcode I-PC in der ersten Tabelle TAB1 eingetragen ist, weil dieser zum Beispiel falsch ist, so wird bei dem Schritt 1.IV eine entsprechende Fehlerreaktion ausgelöst.

Bei dem Schritt 1.Ib wird von der Fahrzeugsteuerungseinrichtung ein Wert einer Soll-Prozessgröße S-PG empfangen.

Die Soll-Prozessgröße S-PG kann zum Beispiel eine auf einer Anzeige des Führerstands dargestellte Geschwindigkeit des Verkehrsmittels umfassen. Es wird angenommen, dass eine die Geschwindigkeit ermittelnde Einheit, beispielsweise eine Fahrzeugsteuerungseinrichtung, als solche korrekt funktioniert und nur die Übertragung an ein Display und die Anzeige auf dem Display nicht sicher sind bzw. zu überprüfen sind. Mithin kann die von der Fahrzeugsteuerungseinrichtung ermittelte Geschwindigkeit als Sollgeschwindigkeit bzw. Soll-Prozessgröße S-PG verwendet werden.
Bei dem Schritt 1.IIb wird ein dem Wert der erfassten Soll-Prozessgröße S-PG zugeordnetes Primzahlenprodukt PZ-P einer zweiten Tabelle TAB2 entnommen.

Nachfolgend wird bei dem Schritt 1.V geprüft, ob das bei dem Schritt 1.IIb ermittelte Primzahlprodukt PZ-P durch die bei dem Schritt 1.IIIa ermittelte Primzahl PZ teilbar ist. Ist dies der Fall, was in FIG 1 mit "j" gekennzeichnet ist, so kann die angezeigte bildliche Darstellung (z.B. der angezeigte Geschwindigkeitswert) bei dem Schritt 1.VI als korrekt eingestuft werden. Andernfalls wird ermittelt, dass die angezeigte bildliche Darstellung (z.B. der angezeigte Geschwindigkeitswert) fehlerhaft ist, was in FIG 1 mit "n" gekennzeichnet ist. In diesem Fall wird bei dem Schritt 1.IV eine entsprechende Fehlerreaktion ausgelöst.
Anschließend wird der Ablauf aus FIG 1 zur Prüfung der Anzeige wieder bei den Schritten 1.Ia und 1.Ib neu gestartet.

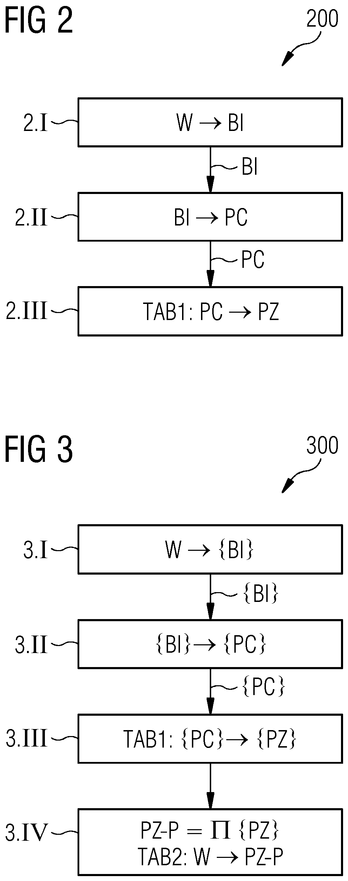

In FIG 2 ist ein Flussdiagramm 200 gezeigt, welches Schritte zum Erstellen der ersten Tabelle TAB1 im Detail veranschaulicht. Die in FIG 2 beschriebenen Schritte werden vorab, d.h. vor der Anwendung des in FIG 1 gezeigten Verfahrens durchgeführt. Bei dem Schritt 2.I wird für einen ersten Wert W einer Prozessgröße eine bildliche Darstellung BI gezeichnet bzw. erzeugt. Als Zeichnen bzw. Erzeugen einer solchen bildlichen Darstellung soll das Erzeugen von entsprechenden elektronischen Bilddaten verstanden werden. Auf Basis der gezeichneten bzw. erzeugten bildlichen Darstellung BI wird dann bei dem Schritt 2.II ein Prüfcode PC berechnet. Schließlich wird bei dem Schritt 2.III auf eindeutige Weise eine Primzahl PZ dem ermittelten Prüfcode PC zugeordnet und der Prüfcode PC und die diesem zugeordnete Primzahl PZ in der ersten Tabelle TAB1 gespeichert. Die Schritte 2.I bis 2.III werden weiterhin für jeden weiteren möglichen Prozesswert bzw. Wert der Prozessgröße PG wiederholt, so dass eine vollständige erste Tabelle TAB1 entsteht.
In FIG 3 wird ein Flussdiagramm 300 veranschaulicht, welches Schritte zum Erstellen einer zweiten Tabelle TAB2 im Detail veranschaulicht. Auch die Erstellung der zweiten Tabelle TAB2 wird vorab, d.h. vor der Anwendung des in FIG 1 gezeigten Verfahrens durchgeführt, aber nach dem in FIG 2 gezeigten Verfahren.
Bei dem Schritt 3.I werden zunächst zu einem ersten Wert W einer Prozessgröße PG die als korrekt angesehenen bildlichen Darstellungen {BI} ausgewählt. Hierbei können die in FIG 2 im Schritt 2.I erzeugten bildlichen Darstellungen verwendet werden. Bei dem Schritt 3.II werden zu der Menge der bildlichen Darstellungen {BI} jeweils die zugehörigen Prüfcodes {PC} berechnet. Anschließend wird bei dem Schritt 3.III die erste Tabelle TAB1 eingelesen und es werden zu den jeweiligen Prüfcodes {PC} diesen in der ersten Tabelle TAB1 zugeordnete Primzahlen {PZ} ermittelt. Schließlich wird bei dem Schritt 3.IV ein Erwartungswert PZ-P als Produkt der zugeordneten Primzahlen {PZ} berechnet und der erste Wert W der Prozessgröße PG und der Erwartungswert PZ-P werden in der zweiten Tabelle TAB2 gespeichert. Die Schritte 3.I bis 3.IV werden ebenfalls für jeden der einzelnen möglichen Werte von Prozessgrößen PG wiederholt, so dass eine vollständige zweite Tabelle TAB2 erzeugt wird.

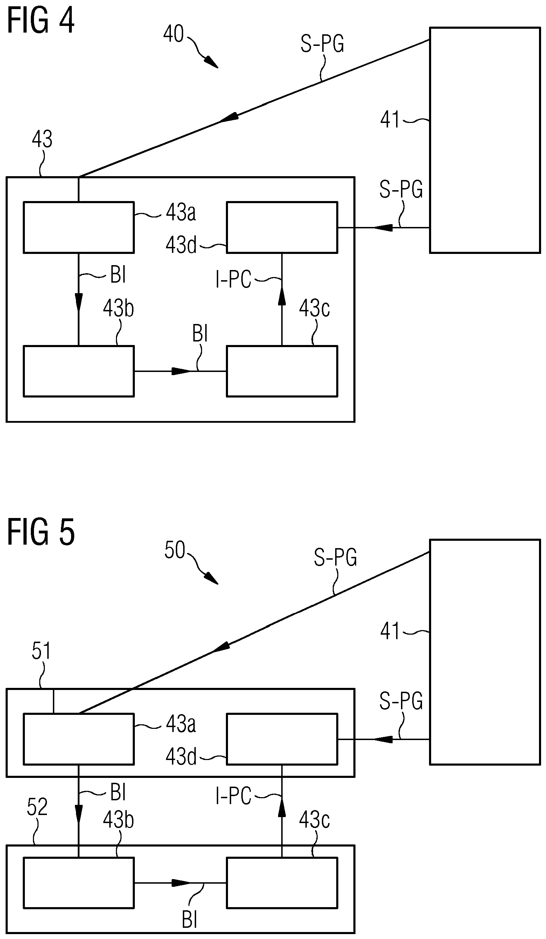

In FIG 4 ist ein Führerstand 40 eines Verkehrsmittels, beispielsweise eines Zugs, schematisch dargestellt. Der Führerstand 40 umfasst eine Anzeigeeinrichtung 43 und eine Fahrzeugsteuerungseinrichtung 41. Die Fahrzeugsteuerungseinrichtung 41 ist dazu eingerichtet, eine Prozessgröße, beispielsweise eine Soll-Prozessgröße S-PG, zu erzeugen. Die Anzeigeeinrichtung 43 umfasst eine Bilderzeugungseinheit 43a, eine Bilddatendarstellungseinheit 43b, eine Prüfcode-Ermittlungseinheit 43c und eine Bildprüfungseinheit 43d. Der Wert der Soll-Prozessgröße S-PG wird an die Bilderzeugungseinheit 43a übermittelt. Die Bilderzeugungseinheit 43a erzeugt auf Basis der empfangenen Prozessgröße S-PG Bilddaten BI. Die Bilddaten BI werden an die Bilddatendarstellungseinheit 43b übermittelt und dort angezeigt. Auf Basis der dargestellten Bildinformation BI wird von der Prüfcode-Ermittlungseinheit 43c ein Ist-Prüfcode I-PC ermittelt. Der ermittelte Ist-Prüfcode I-PC wird anschließend an die Bildprüfungseinheit 43d übermittelt. Die Bildprüfungseinheit 43d erhält zusätzlich von der Fahrzeugsteuerungseinrichtung 41 einen Wert der Soll-Prozessgröße S-PG und führt einen Vergleich der Soll-Prozessgröße S-PG mit dem einer Ist-Prozessgröße zugeordneten Ist-Prüfcode I-PC entsprechend den in FIG 1 veranschaulichten Schritten 1.Ia bis 1.VI durch.

In FIG 5 ist eine dem in FIG 4 veranschaulichten Führerstand 40 sehr ähnliche Anordnung 50 gemäß einem alternativen Ausführungsbeispiel gezeigt. Der in FIG 5 gezeigte Führerstand 50 umfasst ebenfalls eine Fahrzeugsteuerungseinrichtung 41. Anders als bei der in FIG 4 gezeigten Anordnung sind in FIG 5 die Bilderzeugungseinheit 43a und die Bildprüfungseinheit 43d in einer separaten Bildinformationserzeugungseinheit 51 untergebracht und die Bilddatendarstellungseinheit 43b und die Prüfcode-Ermittlungseinheit 43c sind getrennt davon in einer Anzeigeeinheit 52 angeordnet. Eine solche Aufteilung auf eine Bildinformationserzeugungseinheit 51 und eine Anzeigeeinheit 52 ist in WO 2015/082 331 A1 beschrieben, auf die Bezug genommen wird und deren Inhalt hiermit in die vorliegende Anmeldung mit einbezogen ist. der unbestimmten Artikel "ein" bzw. "eine" nicht ausschließt, dass die betreffenden Merkmale auch mehrfach vorhanden sein können. Ebenso schließt der Begriff "Einheit" nicht aus, dass diese aus mehreren Komponenten besteht, die gegebenenfalls auch räumlich verteilt sein können.

## Patentansprüche

1. Verfahren zum Überwachen einer Anzeige (43, 52) eines Führerstands (40, 50) eines Verkehrsmittels, aufweisend die Schritte:
- Erfassen einer Soll-Prozessgröße (S-PG) durch eine Fahrzeugsteuerungseinrichtung und Erzeugen einer bildlichen Darstellung (BI) eines Wertes (W) der Soll-Prozessgröße (S-PG) durch eine Anzeigeeinrichtung (43, 52),
- Berechnen eines Ist-Prüfcodes (I-PC) aus Pixeldaten der bildlichen Darstellung (BI) des Werts (W) der Prozessgröße,
- Ermitteln einer dem berechneten Ist-Prüfcode (I-PC) anhand einer ersten Tabelle (TAB1) eindeutig zugeordneten Primzahl (PZ), wobei die erste Tabelle (TAB1) mit Hilfe der folgenden Schritte vorab erzeugt wird:
- Erzeugen einer bildlichen Darstellung (BI) für einen ersten Wert (W) einer Prozessgröße (PG),
- Berechnen eines Prüfcodes (PC) in Abhängigkeit von der bildlichen Darstellung (BI),
- eindeutiges Zuordnen einer Primzahl (PZ) zu dem Prüfcode (PC) und Speichern des Prüfcodes (PC) und der zugeordneten Primzahl (PZ) in der ersten Tabelle (TAB1),
- Wiederholen der Schritte mit jedem möglichen Wert der Prozessgröße (PG),
- Erfassen eines von der Fahrzeugsteuerungseinrichtung (41) erzeugten, von dem angezeigten Wert der Soll-Prozessgröße möglichweise abweichenden, korrekten Wertes der Soll-Prozessgröße (S-PG),
- Ermitteln eines dem korrekten Wert der Soll-Prozessgröße (S-PG) anhand einer zweiten Tabelle (TAB2) eindeutig zugeordneten Primzahlprodukts (PZ-P), wobei das Primzahlprodukt die Primzahlen aller dem korrekten Wert zugeordneten zulässigen Ist-Prüfcodes umfasst, wobei die zweite Tabelle (TAB2) mit Hilfe der folgenden Schritte vorab erzeugt wird:
- Auswählen einer Menge von gültigen bildlichen Darstellungen ({BI}) zu einem ersten Wert (W) einer Prozessgröße (PG),
- Berechnen einer Menge von gültigen Prüfcodes ({PC}) für die gültigen bildlichen Darstellungen ({BI}),
- Auslesen der den jeweiligen Prüfcodes ({PC}) zugeordneten Primzahlen ({PZ}) aus der ersten Tabelle (TAB1),
- Erzeugen eines Primzahlprodukts (PZ-P) durch Multiplizieren aller zu dem ersten Prozesswert (W₁) zugeordneten aufgefundenen Primzahlen ({PZ}) und Speichern des ersten Prozesswertes (W₁) zusammen mit dem zugeordneten Primzahlenprodukt (PZ-P) in der zweiten Tabelle (TAB2),
- Wiederholen der Schritte mit jedem möglichen Wert der Prozessgröße (PG),
- Prüfen, ob die bildliche Darstellung (BI) korrekt ist, durch Ermitteln, ob das Primzahlprodukt (PZ-P) durch die dem Ist-Prüfcode (I-PC) zugeordnete Primzahl (PZ) ohne Rest teilbar ist.

2. Verfahren nach Anspruch 1, wobei das Verkehrsmittel eines der folgenden Verkehrsmittelarten umfasst:
- einen Zug,
- ein Flugzeug,
- einen Autobus,
- einen Lastwagen,
- einen Pkw.

3. Verfahren nach einem der Ansprüche 1 bis 2, wobei die Soll-Prozessgröße (S-PC) eine ermittelte Geschwindigkeit des Verkehrsmittels umfasst.

4. Anzeigeeinrichtung (43, 51, 52) aufweisend:
- eine Bilderzeugungseinheit (43a), welche dazu eingerichtet ist, auf Basis einer von einer Fahrzeugsteuerungseinrichtung (41) erzeugten Soll-Prozessgröße (S-PG) bildliche Darstellungen (BI) eines Wertes der Soll-Prozessgröße (S-PG) zu erzeugen,
- eine Bilddarstellungseinheit (43b) zum Darstellen der bildlichen Darstellungen (BI) auf einer Bildanzeige,
- eine Prüfcode-Ermittlungseinheit (43c) zum Ermitteln eines Ist-Prüfcodes (I-PC) aus Pixeldaten der bildlichen Darstellungen (BI) auf der Bildanzeige,
- eine Bildprüfungseinheit (43d) zum
- Erfassen eines von der Fahrzeugsteuerungseinrichtung (41) erzeugten von dem angezeigten Wert der Soll-Prozessgröße möglichweise abweichenden, korrekten Wertes der Soll-Prozessgröße (S-PG),
- Ermitteln eines dem korrekten Wert der Soll-Prozessgröße (S-PG) anhand einer zweiten Tabelle (TAB2) eindeutig zugeordneten Primzahlprodukts (PZ-P), wobei das Primzahlprodukt die Primzahlen aller dem korrekten Wert zugeordneten zulässigen Ist-Prüfcodes umfasst, und die zweite Tabelle jeden möglichen Prozesswert zusammen mit dem zugeordneten Primzahlenprodukt speichert,
- Erfassen des von der Prüfcode-Ermittlungseinheit (43c) ermittelten Ist-Prüfcodes (I-PC),
- Ermitteln einer dem eingelesenen Ist-Prüfcode (I-PC) anhand einer ersten Tabelle (TAB1) eindeutig zugeordneten Primzahl (PZ), wobei die erste Tabelle für jeden möglichen Wert der Prozessgröße den jeweiligen Ist-Prüfcode und die diesem eindeutig zugeordnete Primzahl speichert,
- Prüfen, ob die bildliche Darstellung (BI) korrekt ist, durch Ermitteln, ob das Primzahlprodukt (PZ-P) durch die dem Ist-Prüfcode (I-PC) zugeordnete Primzahl (PZ) ohne Rest teilbar ist.

5. Führerstand (40, 50) für ein Verkehrsmittel, aufweisend:
- eine Fahrzeugsteuerungseinrichtung (41) zum Empfangen von Sensordaten betreffend eine Soll-Prozessgröße (S-PG),
- eine Anzeigeeinrichtung (43, 51, 52) nach Anspruch 4.

6. Computerlesbares Medium, auf welchem von einer Rechnereinheit einlesbare und ausführbare Programmabschnitte gespeichert sind, um alle Schritte eines Verfahrens nach einem der Ansprüche 1 bis 3 auszuführen, wenn die Programmabschnitte von der Rechnereinheit ausgeführt werden.

## Claims

1. Method for monitoring a display (43, 52) of a driver's cab (40, 50) of a transport means, comprising the steps of:
- capturing a target process variable (S-PG) using a vehicle control device and producing an image presentation (BI) of a value (W) of the target process variable (S-PG) using a display device (43, 52),
- calculating an actual check code (I-PC) from pixel data of the image presentation (BI) of the value (W) of the process variable,
- ascertaining a prime number (PZ) that is uniquely assigned to the calculated actual check code (I-PC) on the basis of a first table (TAB1), wherein the first table (TAB1) is created in advance with the aid of the following steps:
- producing an image presentation (BI) for a first value (W) of a process variable (PG),
- calculating a check code (PC) in dependence on the image presentation (BI),
- uniquely assigning a prime number (PZ) to the check code (PC) and storing the check code (PC) and the assigned prime number (PZ) in the first table (TAB1),
- repeating the steps with each possible value of the process variable (PG),
- capturing a correct value of the target process variable (S-PG), which is produced by the vehicle control device (41) and may deviate from the displayed value of the target process variable,
- ascertaining a prime number product (PZ-P) that is uniquely assigned to the correct value of the target process variable (S-PG) on the basis of a second table (TAB2), wherein the prime number product comprises the prime numbers of all the permissible actual check codes that are assigned to the correct value, wherein the second table (TAB2) was created previously with the aid of the following steps:
- selecting a set of valid image presentations ({BI}) for a first value (W) of a process variable (PG),
- calculating a set of valid check codes ({PC}) for the valid image presentations ({BI}),
- reading the prime numbers ({PZ}) assigned to the respective check codes ({PC}) from the first table (TAB1),
- producing a prime number product (PZ-P) by multiplying all found prime numbers ({PZ}) that are assigned to the first process value (W₁) and storing the first process value (W₁) together with the assigned prime number product (PZ-P) in the second table (TAB2),
- repeating the steps with each possible value of the process variable (PG),
- checking whether the image presentation (BI) is correct by ascertaining whether the prime number product (PZ-P) is divisible without remainder by the prime number (PZ) that is assigned to the actual check code (I-PC).

2. Method according to Claim 1, wherein the transport means comprises one of the following types of transport means:
- a train,
- an aircraft,
- a bus,
- a lorry,
- a passenger car.

3. Method according to either of Claims 1 to 2, wherein the target process variable (S-PC) comprises an ascertained speed of the transport means.

4. Display device (43, 51, 52) having:
- an image production unit (43a), which is configured to produce, on the basis of a target process variable (S-PG) produced by a vehicle control device (41), image presentations (BI) of a value of the target process variable (S-PG),
- an image presentation unit (43b) for presenting the image presentations (BI) on an image display,
- a check code ascertainment unit (43c) for ascertaining an actual check code (I-PC) from pixel data of the image presentations (BI) on the image display,
- an image verification unit (43d) for
- capturing a correct value of the target process variable (S-PG), which is produced by the vehicle control device (41) and may deviate from the displayed value of the target process variable,
- ascertaining a prime number product (PZ-P) that is uniquely assigned to the correct value of the target process variable (S-PG) on the basis of a second table (TAB2), wherein the prime number product comprises the prime numbers of all the permissible actual check codes that are assigned to the correct value, and the second table (TAB2) stores each possible process value together with the assigned prime number product,
- capturing the actual check code (I-PC) ascertained by the check code ascertainment unit (43c),
- ascertaining a prime number (PZ) that is uniquely assigned to the read actual check code (I-PC) on the basis of a first table (TAB1), wherein the first table stores the respective actual check code and the prime number that is uniquely assigned thereto for each possible value of the process variable,
- checking whether the image presentation (BI) is correct by ascertaining whether the prime number product (PZ-P) is divisible without remainder by the prime number (PZ) that is assigned to the actual check code (I-PC).

5. Driver's cab (40, 50) for a transport means, having:
- a vehicle control device (41) for receiving sensor data relating to a target process variable (S-PG),
- a display device (43, 51, 52) according to Claim 4.

6. Computer-readable medium, on which program sections that are readable and executable by a computer device are stored in order to carry out all the steps of a method according to one of Claims 1 to 3 when the program sections are executed by the computer unit.

## Revendications

1. Procédé de contrôle d'un moyen d'affichage (43, 52) d'une cabine de conduite (40, 50) d'un moyen de transport, comportant les étapes suivantes :
- détection d'une grandeur de processus de consigne (S-PG) par un système de commande de véhicule et génération d'une représentation graphique (BI) d'une valeur (W) de la grandeur de processus de consigne (S-PG) à l'aide d'un moyen d'affichage (43, 52),
- calcul d'un code de contrôle réel (I-PC) sur la base de données de pixel de la représentation graphique (BI) de la valeur (W) de la grandeur de processus,
- détermination d'un nombre premier (PZ) attribué de manière univoque au code de contrôle réel calculé (I-PC) à l'aide d'un premier tableau (TAB1), le premier tableau (TAB1) étant généré au préalable moyennant les étapes suivantes :
- génération d'une représentation graphique (BI) d'une première valeur (W) d'une grandeur de processus (PG),
- calcul d'un code de contrôle (PC) en fonction de la représentation graphique (BI),
- attribution univoque d'un nombre premier (PZ) au code de contrôle (PC) et stockage du code de contrôle (PC) et du nombre premier (PZ) attribué dans le premier tableau (TAB1),
- réitération des étapes avec toutes les valeurs possibles de la grandeur de processus (PG),
- saisie d'une valeur correcte de la grandeur de processus de consigne(S-PG) générée par le système de commande de véhicule (41) différant éventuellement de la valeur affichée de la grandeur de processus de consigne,
- détermination d'un produit de nombres premiers (PZ-P) attribué de manière univoque à la valeur correcte de la grandeur de processus de consigne (S-PG) à l'aide d'un deuxième tableau (TAB2), le produit de nombres premiers comprenant les nombres premiers de tous les codes de contrôle réels admissibles attribués à la valeur correcte, le deuxième tableau (TAB2) étant généré au préalable moyennant les étapes suivantes :
- sélection d'un nombre de représentations graphiques valides ({BI}) pour une première valeur (W) d'une grandeur de processus (PG),
- calcul d'un nombre de codes de contrôle valides ({PC}) pour les représentations graphiques valides ({BI}),
- extraction des nombres premiers ({PZ}) attribués aux codes de contrôle correspondants ({PC}) du premier tableau (TAB1),
- génération d'un produit de nombres premiers (PZ-P) par multiplication de l'ensemble des nombres premiers trouvés attribués à la première grandeur de processus (W₁) et stockage de la première grandeur de processus (W₁) ensemble avec le produit de nombres premiers (PZ-P) attribué dans le deuxième tableau (TAB2),
- réitération des étapes avec toutes les valeurs possibles de la grandeur de processus (PG),
- vérification si la représentation graphique (BI) est correcte, en déterminant si le produit de nombres premiers (PZ-P) peut être divisé sans reste par le nombre premier (PZ) attribué au code de contrôle réel (I-PC).

2. Procédé selon la revendication 1, dans lequel le moyen de transport comporte un des types de moyens de transport suivants :
- train,
- avion,
- car,
- camion,
- véhicule particulier.

3. Procédé selon l'une des revendications 1 à 2, dans lequel la grandeur de processus de consigne (S-PC) comporte une vitesse mesurée du moyen de transport.

4. Moyen d'affichage (43, 51, 52) comportant :
- une unité de génération d'images (43a) conçue pour générer, sur la base d'une grandeur de processus de consigne (S-PG) générée par un système de commande de véhicule (41), des représentations graphiques (BI) d'une valeur de la grandeur de processus de consigne (S-PG),
- une unité de représentation d'images (43b) pour représenter les représentations graphiques (BI) sur un écran,
- une unité de détermination de code de contrôle (43c) pour déterminer un code de contrôle réel (I-PC) sur la base de données de pixel des représentations graphiques (BI) sur l'écran,
- une unité de vérification d'image (43d) pour
- détecter une valeur correcte de la grandeur de processus de consigne (S-PG) générée par le système de commande de véhicule (41) différant éventuellement de la valeur affichée de la grandeur de processus de consigne,
- déterminer un produit de nombres premiers (PZ-P) attribué de manière univoque à la valeur correcte de la grandeur de processus de consigne (S-PG) à l'aide d'un deuxième tableau (TAB2), le produit de nombres premiers comprenant les nombres premiers de tous les codes de contrôle réels admissibles attribués à la valeur correcte, le deuxième tableau stockant toute valeur de processus possible ensemble avec le produit de nombres premiers attribué,
- détecter le code de contrôle réel (I-PC) déterminé par l'unité de détermination du code de contrôle (43c),
- déterminer un nombre premier (PZ) attribué de manière univoque au code de contrôle réel importé (I-PC) à l'aide d'un premier tableau (TAB1), le premier tableau stockant le code de contrôle réel correspondant pour chaque valeur possible de la grandeur de processus ainsi que le nombre premier qui lui est attribué de manière univoque;
- vérifier si la représentation graphique (BI) est correcte, en déterminant si le produit de nombres premiers (PZ-P) peut être divisé sans reste par le nombre premier (PZ) attribué au code de contrôle réel (I-PC).

5. Cabine de conduite (40, 50) pour un moyen de transport, comportant :
- un système de commande de véhicule (41) pour recevoir des données de détecteur concernant une grandeur de processus de consigne (S-PG),
- un moyen d'affichage (43, 51, 52) selon la revendication 4.

6. Support de mémoire lisible par ordinateur sur lequel des séquences de programme lisibles et exécutables par une unité de traitement sont stockées pour exécuter toutes les étapes d'un procédé selon les revendications 1 à 3 lorsque les séquences de programme sont exécutées par l'unité de traitement.
